# EUROPEAN PATENT SPECIFICATION

(11) **EP 4 292 715 B1**
(45) Date of publication and mention of the grant of the patent: **19.02.2025**
(21) Application number: 22178677.5
(22) Date of filing: 13.06.2022
(51) Int. Cl.: B04B 5/12, B04B 11/02, B04B 7/04

(54) **A CENTRIFUGAL SEPARATOR FOR CLEANING GAS**
ZENTRIFUGALSEPARATOR FÜR REINIGUNGSGAS
SÉPARATEUR CENTRIFUGE DESTINÉ À NETTOYER UN GAZ

(43) Date of publication of application: 20.12.2023
(73) Proprietor: Alfdex AB, 261 24 Landskrona (SE)
(72) Inventor: HANSSON, Magnus, SE-246 33 LÖDDEKÖPINGE (SE)
(74) Representative: Alfa Laval Attorneys

(56) References cited:
- EP-A1- 3 156 114
- US-B2- 8 657 908

## Description

### Field of the Invention

The present invention relates to the field of centrifugal separators for cleaning a gas containing liquid contaminants. In particular, the present invention relates to a separator for cleaning crankcase gases of a combustion engine from oil particles.

### Background of the Invention

It is well known that a mixture of fluids having different densities may be separated from one another through use of a centrifugal separator. One specific use of such a separator is in the separation of oil from gas vented from a crankcase forming part of an internal combustion engine.

With regard to this specific use of separators, there can be a tendency for the high-pressure gas found in the combustion chambers of an internal combustion engine to leak past the associated piston rings and into the crankcase of the engine. This continuous leaking of gas into the crankcase can lead to an undesirable increase of pressure within the crankcase and, as a consequence, to a need to vent gas from the casing. Such gas vented from the crankcase typically carries a quantity of engine oil (as droplets or a fine mist), which is picked up from the reservoir of oil held in the crankcase.

In order to allow vented gas to be introduced into the inlet system without also introducing unwanted oil (particularly into a turbocharging system wherein the efficiency of the compressor can be adversely affected by the presence of oil), it is necessary to clean the vented gas (i.e. to remove the oil carried by the gas) prior to the gas being introduced into the inlet system. This cleaning process may be undertaken by a centrifugal separator, which is mounted on or adjacent the crankcase and which directs cleaned gas to the inlet system and directs separated oil back to the crankcase. An example of such a separator is disclosed e.g. in US 8,657,908.

Some separators for cleaning crankcase gas has a stationary insert in the housing of the separator (see e.g. US 8,657,908), which aids in keeping the separated contaminants away from the cleaned gas. From the stationary insert the clean gas is supposed to flow via the outlet tube either to the motor's air inlet or to the open air. The outlet tube is normally assembled from the outside, and as the exiting air must not be contaminated by particles or oil drops which surround the outlet tube, as well as the assembly must be airtight, there is a need of a good sealing of the outlet tube. Sealing of the outlet tube is usually achieved using a number of O-rings.

However, in a finished product such seals may be well hidden within the structure, which means that it may be difficult to check and control the function or the presence of such seal. This may be a problem in the high-volume production of crankcase gas separators. Further, the use of O-ring seals further makes it difficult to automatically produce the separator and a manual assembly may damage the O-ring seals.

There is thus a need in the art for improved sealing functions of a centrifugal separator.

### Summary of the Invention

It is an object of the invention to at least partly overcome one or more limitations of the prior art. In particular, it is an object to provide a centrifugal separator with an enhanced sealing function of the outlet tube that also improves the manufacturing process.

As a first aspect of the invention, there is provided centrifugal separator for cleaning gas containing contaminants, the centrifugal separator comprising
a stationary casing, enclosing a separation space through which a gas flow is permitted,
a gas inlet extending through the stationary casing and permitting supply of the gas to be cleaned,
a rotating member comprising a plurality of separation members arranged in the separation space and being arranged to rotate around an axis (X) of rotation,
a gas outlet tube arranged through the stationary casing and configured to permit discharge of cleaned gas out from the stationary casing,
a drainage outlet arranged in the stationary casing and configured to permit discharge of liquid contaminants that have been separated from the gas out from the stationary casing;
a drive member for rotating the rotating member;
wherein the centrifugal separator further comprises
a stationary insert arranged in the stationary casing and configured for segregating cleaned gas and separated contaminants prior to the cleaned gas and separated contaminants exiting the stationary casing, and
wherein the gas outlet tube and the stationary insert is formed as a single unit.

As used herein, the term "axially" denotes a direction which is parallel to the rotational axis (X). Accordingly, relative terms such as "above", "upper", "top", "below", "lower", and "bottom" refer to relative positions along the rotational axis (X). Correspondingly, the term "radially" denotes a direction extending radially from the rotational axis (X). A "radially inner position" thus refers to a position closer to the rotational axis (X) compared to "a radially outer position". A radial plane is a plane having its normal parallel to the axis of rotation (X). An axial plane is a plane having its normal perpendicular to the axis of rotation (X).

The contaminants in the gas may comprise liquid contaminants, such as oil, and soot.

Consequently, the centrifugal separator may be for separating liquid contaminants, such as oil, from gas. The gas may be crankcase gas of a combustion engine. However, the centrifugal separator may also be suitable for cleaning gases from other sources, for instance the environment of machine tools which frequently contains large amounts of liquid contaminants in the form of oil droplets or oil mist.

The stationary casing of the centrifugal separator may comprise a surrounding side wall, and first and second end walls, which enclose the separation space. The stationary casing may have a cylindrical shape with circular cross-section having a radius R from the axis (X) of rotation to the surrounding side wall. This radius R may be constant at least with respect to a major part of the circumference of the surrounding side wall. The first and second end walls may thus form an upper end wall and a lower end wall of the cylindrical shaped casing. The stationary casing may also be slightly conical.

The gas inlet of the centrifugal separator may be arranged through the first end wall or through the surrounding side wall close to the first end wall, thus at the top of the separator, such that gas entering through the gas inlet is directed to the separation space. The downstream portion of the gas inlet may be centred around the axis of rotation (X). The gas inlet may further comprise an upstream portion in the form of an inlet conduit. This conduit may extend radially or axially from the centrifugal separator, or in any other direction therebetween.

The rotating member is arranged for rotation during operation by means of the drive member. The rotating member comprises a plurality of separation members arranged in the separation space. The separation members of the rotating member are examples of surface-enlarging inserts that promote separation of contaminants from the gas. The separation members may be a stack of separation discs. The separation discs of the stack may be frustoconical. A frustoconical disc may have a planar portion extending in a plane that is perpendicular to the axis of rotation, and a frustoconical portion that may extend upwards or downwards. The planar portion may be closer to the rotational axis than the frustoconical portion. Further, the discs of the stack may be radial discs, in which substantially the whole disc extends in a plane that is perpendicular to the axis of rotation.

It is also to be understood that the separation members, such as separation discs, not necessarily have to be arranged in a stack. The separation space may for example comprise axial discs, or plates that extend around the axis of rotation. The axial discs or plates may be planar, i.e. extending in planes that are parallel to the axis of rotation. The axial discs or plates may also have a slightly or significantly curved shape, such as an arcuate or spiral shape, as seen in a radial plane.

The rotating member may be journaled within the stationary casing via at least one bearing, such as via an upper and lower bearing arranged axially above and below the stack of separation members, respectively.

The drainage outlet may be arranged in the lower portion of the stationary casing, such as arranged in the second end wall, e.g. at the bottom of the separator. Thus, the drainage outlet may be arranged centrally in an end wall opposite the end wall through which, or at which, the inlet is arranged. The drainage outlet of the centrifugal separator may further be formed by several spot shaped through holes of the stationary casing or by a single drainage passage. The drainage outlet may be arranged at the axis of rotation or centred around the axis of rotation. The drainage outlet may also be in an annular collection groove at the inner end wall of the stationary casing. The drainage outlet may be arranged such that contaminants, such as oil, are drained though a bearing arranged for journaling the rotating member.

The outlet for cleaned gas is in the form of a gas outlet tube extending through a wall of the stationary casing, such as through a lower portion of the surrounding side wall of the stationary casing. The gas outlet tube may thus be a conduit for the clean gas having a gas inlet inside the stationary casing and a gas outlet outside of the stationary casing. The gas outlet tube may extend through the stationary casing to a radial position that is larger than the radial position of outer wall of the stationary casing, or to a radial position that is the same as the radial position of the outer wall of the stationary casing.

The gas outlet tube may be a generally cylindrical tube or have another cross-section, such as an oval cross-section.

During operation, gas to be cleaned may be directed centrally through the plurality of separation members, such as centrally through the stack of separation discs. In such a set-up, the rotating member may further define a central space formed by at least one through hole in the separation members. This central space is connected to the gas inlet and configured to convey the gas to be cleaned from the gas inlet to the interspaces between the separation members, such as between the interspaces between the discs of a stack of separation discs. A separation disc that may be used as separation member may comprise a central, essentially flat portion perpendicular to the axis of rotation. This portion may comprise the through holes that form part of the central space.

Thus, the centrifugal separator may be configured to convey gas to be cleaned, such as crankcase gases, from the gas inlet into a central portion of the rotating member. In this manner the crankcase gases may be "pumped" from the central portion of the rotating member into the interspaces between the separation discs in the stack of separation discs by the rotation of the rotating member. Thus, the centrifugal separator may work according to the concurrent flow principle, in which the gas flows in the disc stack from a radial inner part to a radial outer part, which is opposite to a separator operating according to the counter-current flow principle, in which the gas is conducted into the separation space at the periphery and conveyed towards a central part of the separation space.

The drive member may for example comprise a turbine wheel, rotated by means of an oil jet from the lubrication oil system of the combustion engine or a free jet wheel comprising a blow-back disk. However, the drive member may also be independent of the combustion engine and comprise an electrical motor, a hydraulic motor or a pneumatic motor.

Further, according to the first aspect, the separator further comprises a stationary insert. Such insert may be similar to the housing insert as shown in US 8,657,908 and is thus arranged for facilitating keeping the cleaned gas and separated contaminants apart in the stationary insert once the contaminants have been separated from the gas. Moreover, the stationary insert arranged within the casing is formed as a single unit together with the gas outlet tube. Thus, the single unit may be removed from the separator as one single unit.

The first aspect of the invention is based on the insight that by having the stationary insert and the gas outlet tube as a single unit, such as a single moulded unit, at least some of the sealings, such as all of the sealings, between the insert and the gas outlet tube may be removed. This design thus decreases the risk of manual assembly and increases the sealing capacity, thus decreasing the risk of contaminants re-entering the cleaned gas after being separated in the separation space. Further, the first aspect of the invention decreases the risk of leaving a sealing between stationary insert and outlet tube out during production, which is something that is difficult to test or check after assembly of a whole separator.

Consequently, in embodiments of the first aspect, the centrifugal separator is free of any additional sealing between the gas outlet tube and the stationary insert. Such additional sealing could thus be an O-ring.

In embodiments of the first aspect, the stationary casing comprises at least one surrounding annular sidewall. The gas outlet tube, the stationary insert and at least one surrounding annular sidewall may then be formed as a single unit.

The surrounding annular sidewall is thus the wall through which the gas outlet tube is arranged. This further decreases the need of an additional sealing between the gas outlet tube and the stationary casing, and also increases the sealing function for the gas outlet tube, since it is formed as one-piece with the surrounding side wall of the stationary casing. Consequently, in embodiments, the centrifugal separator is free of any additional sealing between the gas outlet tube and the at least one surrounding annular sidewall.

As an example, the stationary casing may comprise an upper and lower surrounding annular sidewall. Then, the gas outlet tube, the stationary insert and the lower surrounding annular sidewall may be formed as a single unit.

The lower surrounding sidewall may be cylindrical in shape and may be joined to the upper surrounding sidewall e.g. by welding or by fastening members such as screws. This facilitates mounting of the rotating member inside the stationary casing. The lower surrounding annular sidewall may extend down to a lower end wall of the stationary casing. The lower end wall may thus be the lower wall extending in the radial direction, such as in the radial plane or with a small angle relative the radial plane. In some embodiments, also the lower end wall is part of the lower surrounding annular sidewall.

Further, the upper end wall of the stationary casing may be formed as one unit together with the upper surrounding annular sidewall.

In embodiments, the centrifugal separator comprises a single surrounding annular sidewall and a lid portion that forms the upper end wall of the stationary casing. Then, the gas outlet tube, the stationary insert and the single surrounding annular sidewall may be formed as a single unit.

As discussed herein, a "single unit" may be a unitary moulding of plastics material. Such unitary moulding may thus comprise the stationary insert and the gas outlet tube or the stationary insert, the gas outlet tube and a surrounding annular sidewall of the stationary housing.

Consequently, in embodiments of the first aspect, the single unit is a moulded unit.

The moulded unit may be manufactured by injection moulding of a polymer or die casting of a metal.

In embodiments of the first aspect, the stationary insert comprises an annular wall member. The stationary insert may then be arranged in the stationary housing so as to form an annular vertical channel for the separated contaminants between the inner wall of the stationary casing and the annular wall member.

The annular wall member may thus extend in the axial direction, such as parallel to the axis of rotation (X) or with a slight angle with the axis of rotation (X). Such angle may be less than 45 degrees, such as less than 30 degrees. In embodiments, the annular wall member extends in the axial direction with an angle that is between 0.5 and 5 degrees, such as between than 0.5 and 3 degrees.

As discussed above, the separated contaminants may comprise oil that after separation from the gas in the separation members are thrown against the inner wall of the stationary casing. Such oil droplets may trickle down the inner wall by means of gravity and be guided to the drainage outlet. The annular vertical channel between the annular wall member and the inner wall of the stationary casing may then form a "calm zone" in which there is a decreased risk of rotating gas pulling separated oil from the inner wall. The annular vertical channel may form a ditch for the separated contaminants.

Moreover, the stationary insert may further comprise a central cup member with conically extending sidewalls. At least a portion of the rotating member may be arranged within such central cup member.

The central cup member may thus be arranged around the axis of rotation. The central cup member may have a frustoconical shape. In embodiments, the gas outlet tube may be arranged such that it has a gas inlet at an inner surface of the central cup member and a gas outlet on the outside of the stationary casing. As discussed above, the separation members may be a stack of separation discs. These discs may be arranged between a lower end plate and an upper top disc, and at least a part of the lower end plate may be arranged within the cup member of the stationary insert. Also portions of the lowermost separation discs may have a portion, such as a lower portion, arranged within the cup member.

As an example, the annular wall member of the stationary insert discussed above may extend downwards from the outer edge of the cup member.

In embodiments of the first aspect, the stationary insert is arranged in a lower portion of the stationary casing.

The lower portion may thus be the lower half of the stationary casing. As discussed above, the stationary casing may comprise an upper and lower surrounding annular sidewall. The stationary insert may then be arranged axially within the lower surrounding side wall such that the lower surrounding sidewall encloses the insert.

In embodiments of the first aspect, the plurality of separation members is a stack of separation discs, such as a stack of frustoconical separation discs. Such discs may have an outer radius and an inner radius, thus forming a central opening in the disc. The frustoconical separation discs may comprise a flat portion that extend perpendicularly to the axis of rotation (X), and a conical portion that extend outwardly and downwardly or upwardly from the flat portion. Openings in the flat portion may form part of a central space within the centrifugal separator into which gas to be cleaned is guided from the gas inlet. Thus, gas to be cleaned may be guided into the central space and then to the interspaces formed between the discs in the disc stack. As a complement, or alternative, the central space may also be formed radially within the inner radius of the discs.

In embodiments of the first aspect, the rotating member comprises an axial shaft that is supported by the at least one bearing. The axial shaft may thus be centred at the axis of rotation (X). The separation members may be arranged around such axial shaft.

As a second aspect of the invention, there is provided a method for cleaning gas containing contaminants, the method comprising
guiding gas containing contaminants to a centrifugal separator according to the first aspect above during rotation of the rotating member,
discharging cleaned gas from the gas outlet, and
discharging contaminants from the drainage outlet.

The contaminants in the gas may comprise liquid contaminants, such as oil, and soot.

This aspect may generally present the same or corresponding advantages as the former aspects. Effects and features of the third aspect are largely analogous to those described above in connection with the first and second aspects. Embodiments mentioned in relation to the first aspect are largely compatible with the third aspect.

### Brief description of the Drawings

The above, as well as additional objects, features and advantages of the present inventive concept, will be better understood through the following illustrative and non-limiting detailed description, with reference to the appended drawings. In the drawings like reference numerals will be used for like elements unless stated otherwise.
Figure 1 shows a schematic drawing of the cross-section of an embodiment of a centrifugal separator for cleaning gas.
Figure 2 shows a perspective view of a single unit comprising the outlet tube, the stationary insert and an outer wall of the stationary casing.

### Detailed Description

The centrifugal separator according to the present disclosure will be further illustrated by the following description with reference to the accompanying drawings.

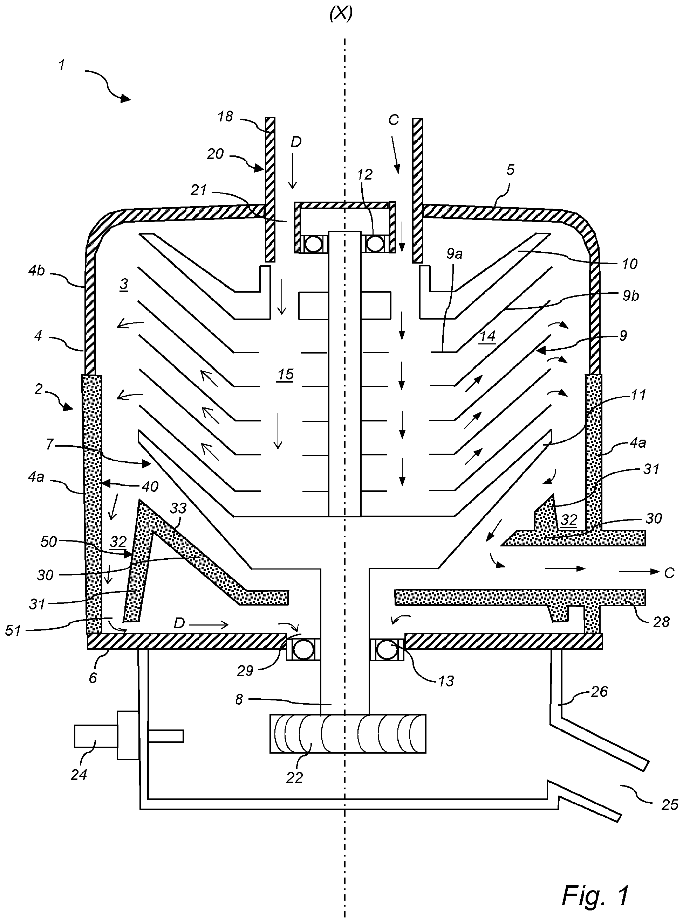

Fig. 1 shows a cross-section of a centrifugal separator 1 according to the present disclosure. The centrifugal separator 1 comprises a stationary casing 2, which is configured to be mounted to a combustion engine (not disclosed), especially a diesel engine, at a suitable position, such as on top of the combustion engine or at the side of the combustion engine.

It is to be noted that the centrifugal separator 1 is also suitable for cleaning gases from other sources than combustion engines, for instance the environment of machine tools which frequently contains large amounts of liquid contaminants in the form of oil droplets or oil mist.

The stationary casing 2 encloses a separation space 3 through which a gas flow is permitted. The stationary casing 2 comprises, or is formed by, a surrounding side wall 4, an upper end wall 5 and a lower end wall 6. The surrounding sidewall 4 comprises an upper 4b and a lower 4a surrounding annular sidewall, attached to each other e.g. via welding or screws (not shown). There may also be a sealing member (not shown), such as an O-ring, between the upper 4b and lower 4a surrounding annular sidewall.

The centrifugal separator 1 comprises a rotating member 7, which is arranged to rotate around an axis (X) of rotation. It should be noted that the stationary casing 2 is stationary in relation to the rotating member 7, and preferably in relation to the combustion engine to which it may be mounted.

The stationary casing 2 has a radius from the axis (X) of rotation to the surrounding side wall 4 that is constant at least with respect to a major part of the circumference of the surrounding side wall 4. The surrounding side wall 4 thus has a circular, or substantially, circular cross-section in a radial plane.

The rotating member 7 comprises a rotatable shaft, i.e. spindle 8 and a stack of separation discs 9 attached to the spindle 8. All the separation discs of the stack 9 are provided between a top disc 10 and a lower end plate 11.

The spindle 8, and thus the rotating member 7, is rotatably supported in the stationary casing 2 by means of an upper bearing 12 and a lower bearing 13, the bearings being arranged one on each axial side of the stack of separation discs 9. However, the bearings could for example both be arranged axially below or above the stack 9 of separation discs.

The separation discs of the disc stack 9 are frusto-conical and extend outwardly and upwardly from the spindle 8. The separation discs thus comprise a flat portion 9a, which extend perpendicularly to the axis of rotation (X), and a conical portion 9b, that extend outwardly and upwardly from the flat portion 9a. It should be noted that the separation discs also could extend outwardly and downwardly, or even radially.

The separation discs of the stack 9 are provided at a distance from each other by means of distance members (not disclosed) in order to form interspaces 14 between adjacent separation discs 9, i.e. an interspace 14 between each pair of adjacent separation discs 9. The axial thickness of each interspace 14 may e.g. be in the order of 0.5 -2 mm, such as 1-2 mm.

The separation discs of the stack 9 may be made of plastic or metal. The number of separation discs in the stack 9 is normally higher than indicated in Fig. 1 and may be for instance 50 to 100 separation discs 9 depending on the size of the centrifugal separator.

The centrifugal separator 1 comprises an oil nozzle 24 arranged for being connected to an engine oil circuit of an internal combustion engine. During running of the internal combustion engine, oil is pumped through the oil nozzle 24 onto a turbine wheel 22, which is arranged in turbine housing 26. Since turbine wheel 22 is connected to the spindle 8, the rotating member 7, and thus the stack of separation discs 9, also rotate upon rotation of wheel 22. As an alternative, the centrifugal separator 1 may comprise an electric motor arranged to rotate the spindle 8 and rotating member 7. As a further alternative, the centrifugal separator 3 may comprise a turbine wheel connected to the spindle 8, where the turbine wheel is arranged to be driven by exhaust gases from the internal combustion engine to rotate the spindle 8 and the rotating member 7. The rotating member 7 may also be arranged for being rotated by a mechanical drive unit. Thus, the centrifugal separator may comprise a mechanical drive unit for rotating the rotating member.

The rotating member 7 defines a central space 15. The central space 15 is formed by a through hole in each of the separation discs 9. In the embodiments of Fig. 1, the central space 15 is formed by a plurality of through holes, each extending through the top disc 10 and through each of the separation discs 9, but not through the lower end plate 11. The through holes are arranged in the flat portions 9a of the separation discs.

The gas inlet 20 is for the supply of the gas to be cleaned. The gas inlet 20 extends through the stationary casing 2, and more precisely through upper end wall 5. The gas inlet 20 is formed by the axially extending inlet conduit 18, which forms an upstream portion, and by through channels 21 that form a downstream portion of the inlet 20.

The through channels 21 are in fluid connection with central space 15 and are arranged radially outside the upper bearing 12. Thus, the gas inlet 20 communicates with the central space 15 so that the gas to be cleaned is conveyed from the inlet 20 via the central space 15 to the interspaces 14 of the stack of separation discs 9. The gas inlet 20 is configured to communicate with the crankcase of the combustion engine, or any other source, via the inlet conduit 18 permitting the supply of crankcase gas from the crankcase to the gas inlet 20 and further to the central space 15 and the interspaces 14 as explained above.

The centrifugal separator 1 comprises a drainage outlet 29 arranged in the lower portion of the stationary casing 2 and configured to permit discharge of liquid contaminants separated from the gas. The drainage outlet 29 is in this embodiment in the form of through holes arranged in the lower end wall 6 so that separated liquid contaminants flow through the lower bearing 13 as they are drained from the separation space 3 to the turbine housing 26. The separated oil, and other particles and/or substances, is led to an oil outlet 25 of the centrifugal separator 1, which together with oil from the oil nozzle 24 used to drive the wheel 22, may be led back to the engine oil circuit of an internal combustion engine.

The gas outlet tube 28 of the centrifugal separator 1 is arranged through the stationary casing 2 and is configured to permit discharge of cleaned gas.

During operation of the centrifugal separator as shown in Fig. 1, the rotating member 7 is kept in rotation by the oil nozzle 24 supplying oil against the wheel 22. As an example, the rotational speed may be in the range of 7.500-12.000 rpm.

Contaminated gas, e.g. crankcase gas from the crankcase of an internal combustion engine, is supplied to the gas inlet 20 via conduit 18. This gas is conducted further into the central space 15 and from there into and through the interspaces 14 between the separation discs of the stack 9. As a consequence of the rotation of the rotating member 7 the gas is brought to rotate, whereby it is pumped further on radially outwardly through gaps or interspaces 14.

During the rotation of the gas in the interspaces 14, solid or liquid particles such as oil suspended in the gas are separated therefrom. The particles settle on the insides of the conical portions 9b of the separation discs and slide or run after that radially outwardly thereon. When the particles and/or liquid drops have reached out to the radial outer edges of the separation discs 9, they are thrown away from the rotating member 7 and hit the inner surface 40 of the surrounding side wall 4. Separated oil particles may form a film on the inner surface of the stationary casing 2. From there, oil may be pulled by gravity downwardly to bottom end wall 6 and then and leave the separation space 3 through the drainage outlet 29. For this, the inner wall of the bottom end wall 6 may be tilted radially inwards, so that oil leaving the surrounding inner wall of the stationary casing 2 may be pulled by gravity towards drainage outlet 29. The path of the contaminants in the gas is schematically illustrated by arrows "D" in Fig. 1.

Cleaned gas freed from particles and exiting from the stack of separation discs 9 leaves the stationary casing 2 through the gas outlet tube 28. The path of the gas through the centrifugal separator 1 is schematically shown by arrows "C" in Fig. 1.

The centrifugal separator od Fig. 1 also comprises a stationary insert 30, which is arranged in a lower portion of the stationary casing 2, in this example in within the lower surrounding sidewall 4a. This stationary insert 30 comprises an annular wall member 31 a central frustoconical cup member 33 with conically extending sidewalls. In this example, the lower part of the end plate 11 is arranged within the central cup member 33. The stationary insert could also be fastened to the lower end wall 6, such as to a bearing plate for the lowermost bearing 13.

The annular wall member 31 extends axially downwards from the outer edge of the cup member 33. The stationary insert 30 is configured for segregating cleaned gas and separated contaminants prior to the cleaned gas and separated contaminants exit the stationary casing 2. For this purpose, the stationary insert 30 is arranged in the stationary housing 2 so as to form an annular vertical channel 32 for the separated contaminants between the inner wall 40 of the stationary casing 2 and the annular wall member 31.

The annular wall member 31 may not extend axially all the way down to the lower end wall 6. In such case, there is a gap 51 provided below the axially lowermost part of the annular wall member 31. Thus, the annular vertical channel 32 may form an annular slit and, during use of the separator 1, may collect separated oil droplets which are thrown from the separation discs 9 and run downwards on the inner wall 40 of the stationary casing 4 under the action of gravity. Also the action of a downwards spiralling gas flow may force the oil on the inner wall 40 downwards. Oil in the vertical channel 32 may flow so as to pass into the region formed below an underside of the housing insert 32 and be drained via drainage outlet 29.

As an alternative, the annular vertical channel 32 may form a ditch 32 having a U-shaped cross-section. Gaps 51 may then be drain holes in such ditch through which oil collected in the ditch 32 may flow into the region formed below an underside of the housing insert 32 and be drained via drainage outlet 29. Drainage outlet may be formed so that oil flows through the lower bearing 13, or radially outside the lower bearing 13, down into the turbine housing 26.

The annular vertical channel 32 thus shields the separated liquid particles flowing down on inner wall 40 from the rotating gas, so as to decrease the risk of separated oil being pulled from the inner wall 40 on its way down to drainage outlet 29.

Cleaned gas flows in this example into the gas outlet tube 28 via the inner volume formed by the cup member 33, since the gas outlet tube has its gas inlet at an inner surface of the cup member 33.

As illustrated by the dotted texture of Fig. 1, the gas outlet tube 28 and the stationary insert 30 is formed as a single unit 50. Further, the stationary casing 2 comprises an upper 4b and lower 4a surrounding annular sidewall, and also the lower surrounding sidewall 4a is part of the single unit 50. This single unit 50 is a moulded unit cast as a single item of a polymer or plastic material. Due to the formation of the stationary insert 30, the gas outlet tube 28 and the lower surrounding annular sidewall 4a as a single unit, the centrifugal separator 1 is free of any additional sealing, such as an O-ring, between the gas outlet tube 28 and the stationary insert 30. Further, the centrifugal separator 1 is free of any additional sealing, such as an O-ring, between the gas outlet tube 28 and the lower surrounding annular sidewall 4a.

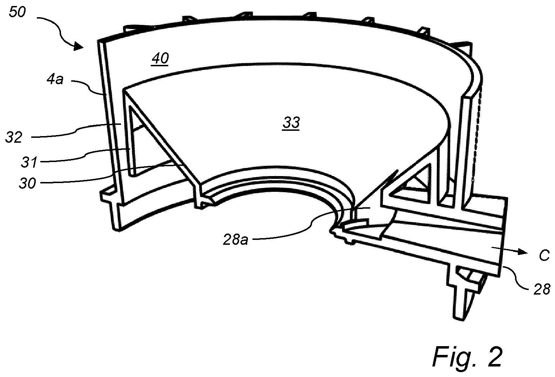

Fig 2 shows a perspective section view of the single unit 50 to further illustrate the formed annular vertical channel 32 between the housing insert 30 and the inner wall 40 of the surrounding sidewall 4a. Further, the gas inlet 28a to the outlet conduit 28 is arranged at the inner surface of the cup portion 33, and the direction of the cleaned gas exiting via the outlet tube 28 is indicated by arrow "C".

The single unit 50 as shown in Fig. 2 comprises the gas outlet tube 28, the stationary insert 30 and the lower surrounding annular sidewall 4a and has been cast as a single moulded unit.

The invention is not limited to the embodiment disclosed but may be varied and modified within the scope of the claims set out below. The invention is not limited to the orientation of the axis of rotation (X) disclosed in the figures. The term "centrifugal separator" also comprises centrifugal separators with a substantially horizontally oriented axis of rotation. In the above the inventive concept has mainly been described with reference to a limited number of examples. However, as is readily appreciated by a person skilled in the art, other examples than the ones disclosed above are equally possible within the scope of the inventive concept, as defined by the appended claims.

## Claims

1. A centrifugal separator (1) for cleaning gas containing contaminants, said centrifugal separator comprising
a stationary casing (2), enclosing a separation space (3) through which a gas flow is permitted,
a gas inlet (20) extending through the stationary casing (2) and permitting supply of the gas to be cleaned,
a rotating member (7) comprising a plurality of separation members (9) arranged in said separation space (3) and being arranged to rotate around an axis (X) of rotation,
a gas outlet tube (28) arranged through the stationary casing (2) and configured to permit discharge of cleaned gas out from the stationary casing (2),
a drainage outlet (29) arranged in the stationary casing (2) and configured to permit discharge of liquid contaminants that have been separated from the gas out from the stationary casing;
a drive member (22) for rotating the rotating member (7);
wherein the centrifugal separator further comprises
a stationary insert (30) arranged in the stationary casing (2) and configured for segregating cleaned gas and separated contaminants prior to the cleaned gas and separated contaminants exiting said stationary casing (2), and
**characterised in that**
said gas outlet tube (28) and said stationary insert (30) is formed as a single unit (50).

2. A centrifugal separator (1) according to claim 1, wherein the centrifugal separator (1) is free of any additional sealing between said gas outlet tube (28) and said stationary insert (30).

3. A centrifugal separator (1) according to claim 1, wherein the stationary casing (2) comprises at least one surrounding annular sidewall (4a, 4b), and wherein the gas outlet tube (28), the stationary insert (30) and at least one surrounding annular sidewall (4a, 4b) is formed as a single unit (50).

4. A centrifugal separator (1) according to claim 3, wherein the centrifugal separator is free of any additional sealing between said gas outlet tube (28) and said at least one surrounding annular sidewall (30).

5. A centrifugal separator (1) according to claim 3 or 4, wherein the stationary casing (2) comprises an upper (4b) and lower (4a) surrounding annular sidewall, and wherein said gas outlet tube (28), the stationary insert (30) and the lower surrounding annular sidewall (4a) is formed as a single unit (50).

6. A centrifugal separator (1) according to any previous claim, wherein the single unit (50) is a moulded unit.

7. A centrifugal separator (1) according to any previous claim, wherein the stationary insert (30) comprises an annular wall member (31), and wherein said stationary insert (30) is arranged in said stationary housing (2) so as to form an annular vertical channel (32) for the separated contaminants between the inner wall (40) of said stationary casing (2) and said annular wall member (31).

8. A centrifugal separator (1) according to claim 7, wherein the stationary insert (30) further comprises a central cup member (33) with conically extending sidewalls, and wherein at least a portion of the rotating member (7) is arranged within said central cup member (33).

9. A centrifugal separator (1) according to claim 8, wherein said annular wall member (31) extends downwards from the outer edge of said cup member (33).

10. A centrifugal separator (1) according to any previous claim, wherein said stationary insert (30) is arranged in a lower portion of the stationary casing (2).

11. A centrifugal separator (1) according to any previous claim, wherein said separation members (9) is a stack of frustoconical separation discs.

## Patentansprüche

1. Zentrifugalseparator (1) zur Reinigung von Gas, das Verunreinigungen enthält, wobei der Zentrifugalseparator Folgendes umfasst:
ein stationäres Gehäuse (2), das einen Trennraum (3) umschließt, durch den ein Gasfluss ermöglicht ist,
einen Gaseinlass (20), der sich durch das stationäre Gehäuse (2) erstreckt und eine Zufuhr des zu reinigenden Gases ermöglicht,
ein Drehelement (7), das eine Vielzahl von Trennelementen (9) umfasst, die in dem Trennraum (3) angeordnet sind und dazu angeordnet sind, sich um eine Drehachse (X) zu drehen,
ein Gasauslassrohr (28), das durch das stationäre Gehäuse (2) angeordnet ist und konfiguriert ist, um einen Ausstoß von gereinigtem Gas aus dem stationären Gehäuse (2) zu ermöglichen,
einen Drainageauslass (29), der in dem stationären Gehäuse (2) angeordnet ist und konfiguriert ist, um einen Ausstoß von flüssigen Verunreinigungen, die von dem Gas getrennt wurden, aus dem stationären Gehäuse zu ermöglichen;
ein Antriebselement (22) zum Drehen des Drehelements (7);
wobei der Zentrifugalseparator ferner Folgendes umfasst:
einen stationären Einsatz (30), der in dem stationären Gehäuse (2) angeordnet ist und konfiguriert ist, um gereinigtes Gas und abgetrennte Verunreinigungen abzuscheiden, bevor das gereinigte Gas und die abgetrennten Verunreinigungen aus dem stationären Gehäuse (2) austreten, und
**dadurch gekennzeichnet, dass**
das Gasauslassrohr (28) und der stationäre Einsatz (30) als eine einzige Einheit (50) gebildet ist.

2. Zentrifugalseparator (1) nach Anspruch 1, wobei der Zentrifugalseparator (1) frei von jeglicher zusätzlicher Abdichtung zwischen dem Gasauslassrohr (28) und dem stationären Einsatz (30) ist.

3. Zentrifugalseparator (1) nach Anspruch 1, wobei das stationäre Gehäuse (2) mindestens eine umgebende ringförmige Seitenwand (4a, 4b) umfasst, und wobei das Gasauslassrohr (28), der stationäre Einsatz (30) und mindestens eine umgebende ringförmige Seitenwand (4a, 4b) als eine einzige Einheit (50) gebildet ist.

4. Zentrifugalseparator (1) nach Anspruch 3, wobei der Zentrifugalseparator frei von jeglicher zusätzlicher Abdichtung zwischen dem Gasauslassrohr (28) und der mindestens einen umgebenden ringförmigen Seitenwand (30) ist.

5. Zentrifugalseparator (1) nach Anspruch 3 oder 4, wobei das stationäre Gehäuse (2) eine obere (4b) und eine untere (4a) umgebende ringförmige Seitenwand umfasst, und wobei das Gasauslassrohr (28), der stationäre Einsatz (30) und die untere umgebende ringförmige Seitenwand (4a) als eine einzige Einheit (50) gebildet ist.

6. Zentrifugalseparator (1) nach einem der vorhergehenden Ansprüche, wobei die einzige Einheit (50) eine gegossene Einheit ist.

7. Zentrifugalseparator (1) nach einem der vorhergehenden Ansprüche, wobei der stationäre Einsatz (30) ein ringförmiges Wandelement (31) umfasst, und wobei der stationäre Einsatz (30) so in der stationären Aufnahme (2) angeordnet ist, dass er einen ringförmigen vertikalen Kanal (32) für die abgetrennten Verunreinigungen zwischen der Innenwand (40) des stationären Gehäuses (2) und dem ringförmigen Wandelement (31) bildet.

8. Zentrifugalseparator (1) nach Anspruch 7, wobei der stationäre Einsatz (30) ferner ein zentrales Schalenelement (33) mit sich konisch erstreckenden Seitenwänden umfasst, und wobei mindestens ein Abschnitt des Drehelements (7) innerhalb des zentralen Schalenelements (33) angeordnet ist.

9. Zentrifugalseparator (1) nach Anspruch 8, wobei sich das ringförmige Wandelement (31) von der äußeren Kante des Schalenelements (33) nach unten erstreckt.

10. Zentrifugalseparator (1) nach einem der vorhergehenden Ansprüche, wobei der stationäre Einsatz (30) in einem unteren Abschnitt des stationären Gehäuses (2) angeordnet ist.

11. Zentrifugalseparator (1) nach einem der vorhergehenden Ansprüche, wobei die Trennelemente (9) ein Stapel von kegelstumpfförmigen Trennscheiben sind.

## Revendications

1. Séparateur centrifuge (1) pour l'épuration de gaz contenant des contaminants, ledit séparateur centrifuge comprenant
un carter fixe (2), renfermant un espace de séparation (3) à travers lequel un écoulement gazeux est permis,
une entrée de gaz (20) s'étendant à travers le carter fixe (2) et permettant une alimentation en gaz à épurer,
un élément rotatif (7) comprenant une pluralité d'éléments de séparation (9) disposés dans ledit espace de séparation (3) et étant disposés pour tourner autour d'un axe (X) de rotation,
un tuyau de sortie de gaz (28) disposé à travers le carter fixe (2) et configuré pour permettre une évacuation de gaz épuré hors du carter fixe (2),
une sortie de drainage (29) disposée dans le carter fixe (2) et configurée pour permettre une évacuation de contaminants liquides qui ont été séparés du gaz hors du carter fixe ;
un élément d'entraînement (22) pour faire tourner l'élément rotatif (7) ;
dans lequel le séparateur centrifuge comprend en outre
un insert fixe (30) disposé dans le carter fixe (2) et configuré pour mettre à part du gaz épuré et des contaminants séparés avant que le gaz épuré et les contaminants séparés sortent dudit carter fixe (2), et
**caractérisée en ce que**
ledit tuyau de sortie de gaz (28) et ledit insert fixe (30) est formés en une unité unique (50).

2. Séparateur centrifuge (1) selon la revendication 1, dans lequel le séparateur centrifuge (1) est dépourvu d'une quelconque étanchéité supplémentaire entre ledit tuyau de sortie de gaz (28) et ledit insert fixe (30).

3. Séparateur centrifuge (1) selon la revendication 1, dans lequel le carter fixe (2) comprend au moins une paroi latérale annulaire d'enceinte (4a, 4b), et dans lequel le tuyau de sortie de gaz (28), l'insert fixe (30) et au moins une paroi latérale annulaire d'enceinte (4a, 4b) est formés en une unité unique (50).

4. Séparateur centrifuge (1) selon la revendication 3, dans lequel le séparateur centrifuge est dépourvu d'une quelconque étanchéité supplémentaire entre ledit tuyau de sortie de gaz (28) et ladite au moins une paroi latérale annulaire d'enceinte (30).

5. Séparateur centrifuge (1) selon la revendication 3 ou 4, dans lequel le carter fixe (2) comprend une paroi latérale annulaire d'enceinte supérieure (4b) et inférieure (4a), et dans lequel ledit tuyau de sortie de gaz (28), l'insert fixe (30) et la paroi latérale annulaire d'enceinte inférieure (4a) est formés en une unité unique (50).

6. Séparateur centrifuge (1) selon l'une quelconque des revendications précédentes, dans lequel l'unité unique (50) est une unité moulée.

7. Séparateur centrifuge (1) selon l'une quelconque des revendications précédentes, dans lequel l'insert fixe (30) comprend un élément de paroi annulaire (31), et dans lequel ledit insert fixe (30) est disposé dans ledit logement fixe (2) de manière à former un canal vertical annulaire (32) pour les contaminants séparés entre la paroi intérieure (40) dudit carter fixe (2) et ledit élément de paroi annulaire (31).

8. Séparateur centrifuge (1) selon la revendication 7, dans lequel l'insert fixe (30) comprend en outre un élément central formant coupe (33) avec des parois latérales s'étendant de manière conique, et dans lequel au moins une partie de l'élément rotatif (7) est disposée à l'intérieur dudit élément central formant coupe (33).

9. Séparateur centrifuge (1) selon la revendication 8, dans lequel ledit élément de paroi annulaire (31) s'étend vers le bas à partir du bord extérieur dudit élément formant coupe (33).

10. Séparateur centrifuge (1) selon l'une quelconque des revendications précédentes, dans lequel ledit insert fixe (30) est disposé dans une partie inférieure du carter fixe (2).

11. Séparateur centrifuge (1) selon l'une quelconque des revendications précédentes, dans lequel lesdits éléments de séparation (9) sont un empilement de disques de séparation tronconiques.
